(19) Europäisches Patentamt
European Patent Office
Office européen des brevets

(11) **EP 3 126 459 B1**

(12) **FASCICULE DE BREVET EUROPEEN**

(45) Date de publication et mention de la délivrance du brevet:
**25.07.2018 Bulletin 2018/30**

(21) Numéro de dépôt: **15712408.2**

(22) Date de dépôt: **13.02.2015**

(51) Int Cl.:
*C09D 5/32* (2006.01)     *C23C 2/26* (2006.01)
*C08K 3/04* (2006.01)     *C21D 6/00* (2006.01)
*C23C 2/40* (2006.01)     *C21D 9/46* (2006.01)
*C21D 9/50* (2006.01)     *C21D 1/22* (2006.01)
*C22C 38/06* (2006.01)    *C22C 38/02* (2006.01)
*C22C 38/04* (2006.01)    *B21D 22/02* (2006.01)
*B21D 35/00* (2006.01)    *C09D 123/06* (2006.01)
*C09D 133/02* (2006.01)   *C09D 163/00* (2006.01)
*C09D 167/02* (2006.01)   *C21D 8/02* (2006.01)
*C22C 38/28* (2006.01)    *C22C 38/32* (2006.01)
*C23F 17/00* (2006.01)

(86) Numéro de dépôt international:
**PCT/IB2015/000143**

(87) Numéro de publication internationale:
**WO 2015/150892 (08.10.2015 Gazette 2015/40)**

(54) **PROCÉDÉ DE FABRICATION À HAUTE PRODUCTIVITÉ DE PIÈCES D'ACIER REVÊTUES ET DURCIES À LA PRESSE**

VERFAHREN ZUR HOCHPRODUKTIVEN HERSTELLUNG VON BESCHICHTETEN UND PRESSGEHÄRTETEN STAHLTEILEN

PROCESS FOR HIGH PRODUCTIVITY PRODUCTION OF STEEL PARTS COATED AND PRESS HARDENED

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **31.03.2014 PCT/IB2014/000455**

(43) Date de publication de la demande:
**08.02.2017 Bulletin 2017/06**

(73) Titulaire: **ArcelorMittal**
**1160 Luxembourg (LU)**

(72) Inventeurs:
• **DESSAIN, Christine**
**F-90410 Villeneuve sur Verberie (FR)**

• **SANADRES, Michel**
**F-60700 Pont Saint Maxence (FR)**

(74) Mandataire: **Plaisant, Sophie Marie**
**ArcelorMittal France**
**Research & Development Intellectual Property**
**Immeuble Le Cézanne**
**6, rue André Campra**
**93212 La Plaine Saint-Denis (FR)**

(56) Documents cités:
**WO-A1-2008/053273     WO-A2-2012/092337**
**DE-A1-102007 011 553   US-A1- 2005 282 033**

**Description**

L'invention concerne un procédé de fabrication de pièces à partir de tôles d'acier pré-revêtues, chauffées, embouties puis durcies lors d'un refroidissement obtenu par maintien au sein d'un outil de presse; ces pièces sont notamment destinées à être utilisées comme éléments de structure dans les véhicules automobiles pour assurer des fonctions d'anti-intrusion ou d'absorption d'énergie. De telles pièces peuvent être aussi utilisées par exemple pour la fabrication d'outils ou de pièces de machines agricoles. Dans ce type d'applications, on cherche à réaliser des pièces en acier combinant une résistance mécanique élevée une bonne tenue à la corrosion et une bonne aptitude au soudage. Ces pièces embouties à chaud doivent pouvoir être fabriquées par des procédés à haute productivité. Ces exigences se rencontrent notamment dans l'industrie automobile où l'on recherche un allègement significatif des véhicules. Des pièces anti-intrusion ou des pièces participant à la sécurité des véhicules automobiles telles que les traverses de pare-choc, renforts de portière ou de pied milieu, nécessitent par exemple les qualités mentionnées ci-dessus. Ceci peut être notamment obtenu grâce à des pièces d'aciers dont la microstructure est martensitique ou bainito-martensitique.

La fabrication de telles pièces est notamment connue d'après les publications FR2780984 et FR2807447 selon lesquelles un flan découpé dans une tôle d'acier pour traitement thermique, pré-revêtu d'un métal ou d'un alliage métallique, est chauffé dans un four puis embouti à chaud. Le pré-revêtement peut être de l'aluminium ou un alliage d'aluminium, du zinc ou un alliage de zinc. Lors du chauffage en four, ce pré-revêtement s'allie avec le substrat d'acier pour former un composé assurant une protection de la surface de l'acier contre la décarburation et la formation de calamine. Ce composé est apte à la mise en forme à chaud. Le maintien de la pièce dans l'outillage après la mise en forme permet un refroidissement rapide qui conduit à l'obtention de microstructures de trempe dans le substrat d'acier, associées à de très hautes caractéristiques mécaniques de résistance et de dureté. Ce procédé est connu sous le nom de durcissement par trempe sous presse ou « press hardening ».

Dans un tel procédé, les flans sont généralement chauffés dans des fours en continu, le déplacement des flans s'effectuant sur des rouleaux dans ces fours. Cette phase comprend une étape de chauffage suivie d'un maintien à température dans le four, généralement vers 900-950°C. La température de maintien et la durée de maintien dépendent notamment de l'épaisseur des flans et de la nature du pré-revêtement des flans. Pour des raisons de productivité, on recherche des méthodes qui permettent de raccourcir le plus possible l'étape du chauffage en four. C'est ainsi que la publication EP2312005 divulgue un procédé dans lequel on approvisionne une bobine d'acier avec un pré-revêtement d'aluminium, que l'on recuit à 600-750°C pendant une durée allant de 1 heure à 200 heures. Une diffusion du fer du substrat vers le pré-revêtement intervient, si bien qu'on obtient de la sorte un produit préallié. Après découpe, ces flans pré-alliés peuvent être chauffés plus rapidement, notamment en raison de la modification d'émissivité causée par le traitement de pré-alliation. Cette méthode requiert cependant un recuit en bobine préalable de longue durée.

Dans le document EP2463395, on a également proposé d'accélérer la cinétique de chauffage en diminuant localement la réflectivité d'un flan grâce à diverses méthodes : dépôt préalable de peinture noire, modification de la rugosité par grenaillage, par laminage, Laser, ou attaque par immersion dans une solution acide. Ce document fournit notamment des exemples où des pigments en phase aqueuse ou de la peinture noire à base de polyester/mélamine en phase solvant, ont été déposés sur des pré-revêtements galvanisés. Compte tenu du taux usuel de mélange : 90-92% polyester et 8-10% de mélamine ($C_{15}H_{30}N_6O_6$) dans la couche de peinture après séchage, et d'une concentration pigmentaire volumique maximale de 30%, la teneur en azote dans la couche de peinture mise en oeuvre dans ces essais est de l'ordre de 1,7 à 2,4%% après séchage. Cependant, ce procédé laisse complètement de côté certains problèmes essentiels liés à l'utilisation ultérieure de ces pièces : en effet, après emboutissage à chaud, les pièces doivent être aptes à une peinture par cataphorèse, être soudables et résister à la corrosion. Or, comme on le montrera ci-dessous, l'application avant emboutissage à chaud d'une peinture noire usuelle résistant à haute température, ne permet pas d'obtenir ces propriétés.

On recherche donc un procédé permettant simultanément d'accroître la productivité du procédé d'emboutissage à chaud et de faire en sorte que les pièces embouties à chaud et durcies ainsi obtenues soient compatibles avec des conditions usuelles de production industrielle, c'est à dire ne nécessitent pas par exemple une modification des réglages existants des machines de soudage par résistance par points pour l'assemblage de ces pièces. Ce procédé doit pouvoir être également compatible avec la fabrication de flans soudés pré-revêtus d'un revêtement d'aluminium qui nécessite l'ablation préalable d'une partie du pré-revêtement à la périphérie du flan, comme le décrit le document EP2007545.

On recherche également un procédé peu sensible à certaines variations éventuelles des conditions de fabrication : en particulier, on recherche un procédé dont les résultats sont relativement peu sensibles aux conditions de préparation du flan pré-revêtu.

De plus, on recherche un procédé permettant d'obtenir une excellente résistance à la fissuration différée : on sait en effet que le durcissement à la presse permet d'obtenir des pièces avec une résistance mécanique extrêmement élevée dont la microstructure peut être sensible à une fissuration due à la présence d'hydrogène en présence de contraintes, par exemple celles résultant de la découpe des pièces. On recherche donc un procédé ne présentant pas de risque accru de fissuration différée ou qui permettrait même de diminuer la sensibilité à ce risque.

On recherche également un procédé permettant de fabriquer des flans soudés fabriqués à partir de tôles de différentes épaisseurs, qui ne conduirait pas à une vitesse de chauffage sensiblement différente dans les différentes parties de ces flans soudés.

On recherche enfin un procédé dont les étapes constitutives et les éléments matériels permettant leur mise en oeuvre, ne conduisent pas à un surcoût prohibitif.

De façon surprenante, les inventeurs ont mis en évidence que les problèmes évoqués ci-dessus étaient résolus de façon économique grâce à un dépôt avant emboutissage à chaud, d'une couche polymérisée sur un pré-revêtement comprenant au moins une couche d'aluminium ou d'alliage d'aluminium, la couche polymérisée étant composée d'un polymère spécifique contenant des pigments de carbone en quantité comprise entre 3 et 30% en poids.

Dans ce but, l'invention a pour premier objet une tôle ou un flan pré-revêtu comprenant un substrat d'acier pour traitement thermique 1 surmonté, sur au moins une partie d'au moins une de ses faces principales, d'un pré-revêtement 2, comprenant au moins une couche d'aluminium ou d'alliage d'aluminium, surmonté, sur au moins une partie du pré-revêtement, d'une couche polymérisée 3 d'épaisseur comprise entre 2 et 30 micromètres, composée d'un polymère ne comprenant pas de silicium et dont la teneur en azote est en quantité inférieure à 1% en poids exprimée par rapport à la couche, la couche polymérisée contenant des pigments carbonés en quantité comprise entre 3 et 30% en poids, exprimée par rapport à la couche. Préférentiellement, les éléments du polymère sont sélectionnés dans une liste constituée de C, H, O, N.

Selon un mode préféré, la couche polymérisée est obtenue à partir d'une résine sous forme de dispersion ou d'émulsion en phase aqueuse.

Selon un autre mode préféré, la couche polymérisée est obtenue à partir d'une résine sous forme de solution dans un solvant non aqueux.

Selon un autre mode préféré, la couche polymérisée est constituée d'un film colaminé au substrat.

A titre préférentiel, la couche polymérisée est obtenue à partir d'une résine de type acrylique.

Selon un mode préféré, la couche polymérisée est obtenue à partir d'une résine de type époxy ou acrylique sous forme de solution dans un solvant non aqueux.

Selon un autre mode préférentiel, la couche polymérisée est constituée d'un film polyéthylène téréphtalate ou polyéthylène ou polybutylène-téréphtalate ou polypropylène.

Les pigments sont constitués préférentiellement au moins partiellement de carbone activé.

Selon un mode préférentiel, les pigments sont constitués au moins partiellement de graphite.

La quantité de carbone activé dans la couche polymérisée est préférentiellement inférieure à 5%, exprimée en poids par rapport à la couche.

A titre préféré, la couche d'aluminium ou d'alliage d'aluminium constitue plus de 50% de l'épaisseur du prérevêtement.

L'invention a également pour objet une tôle ou un flan selon l'un quelconque des modes décrits ci-dessus, caractérisé en ce que le pré-revêtement comporte une couche d'alliage intermétallique 4 en contact avec le substrat 1 surmontée d'une couche d'alliage d'aluminium métallique 5 et en ce que, sur au moins une face pré-revêtue de la tôle, une zone 6 est dépourvue de la couche polymérisée et de la couche d'alliage métallique, la zone étant située à la périphérie de la tôle ou du flan.

L'invention a également pour objet un flan soudé réalisé par soudage d'au moins deux flans, l'un au moins des flans 7 étant un flan selon l'une quelconque des caractéristiques ci-dessus, d'épaisseur $e_7$, et moins un des flans étant un flan 8 d'épaisseur $e_8$ constitué d'un substrat d'acier revêtu d'une couche d'aluminium ou d'alliage d'aluminium identique

$$\frac{e_7}{e_8} > 1.$$

à celle du flan 7, l'épaisseur des flans 7 et 8 étant telle que

Le flan (7) est préférentiellement un flan revêtu sur la totalité du pré-revêtement, de la couche polymérisée 3,

$$2,6 \geq \frac{e_7}{e_8} \geq 2,2.$$

et les épaisseurs $e_7$ et $e_8$ sont telles que:

L'invention a également pour objet une pièce 9 obtenue par austénitisation puis emboutissage à chaud et trempe par maintien dans l'outil d'emboutissage, d'une tôle ou d'un flan comportant un pré-revêtement comprenant au moins une couche d'aluminium ou d'alliage d'aluminium, la microstructure du substrat 10 de la pièce contenant de la martensite et/ou de la bainite, le substrat étant surmonté sur au moins l'une de ses faces principales, d'un revêtement 11 résultant de l'interdiffusion entre le substrat d'acier et le pré-revêtement, le revêtement 11 étant surmonté d'une couche d'oxyde 12, la teneur pondérale moyenne en oxygène entre 0 et 0,01 micromètres sous la surface de la pièce étant inférieure à 25%, et la teneur pondérale moyenne en oxygène entre 0,1 et 0,2 micromètres sous la surface, étant inférieure à 10%.

L'invention a également pour objet un procédé de fabrication d'une pièce durcie à la presse, comprenant les étapes successives selon lesquelles :

- on approvisionne une tôle ou un flan substrat d'acier pour traitement thermique
- on effectue un pré-revêtement comportant au moins une couche d'aluminium ou d'alliage d'aluminium en contact avec le substrat d'acier, sur une au moins une des faces principales de la tôle ou du flan, puis
- on dépose sur le pré-revêtement, une couche polymérisée 3 d'épaisseur comprise entre 2 et 30 micromètres, composée d'un polymère ne comprenant pas de silicium et dont la teneur en azote est en quantité inférieure à 1% en poids exprimée par rapport à la couche, la couche polymérisée contenant des pigments carbonés en quantité comprise entre 3 et 30% en poids, exprimée par rapport à la couche, puis
- on chauffe le flan ou la tôle de manière à réaliser une interdiffusion entre le substrat d'acier et le pré-revêtement et de manière à conférer une structure partiellement ou totalement austénitique à l'acier, puis
- on emboutit le flan ou la tôle à chaud pour obtenir une pièce, puis
- on refroidit la pièce par maintien dans l'outil d'emboutissage de façon à ce que la microstructure du substrat d'acier contienne, au moins dans une partie de la pièce, de la martensite et/ou de bainite Selon un mode préféré, l'épaisseur de la tôle ou du flan est compris entre 1 et 2 mm et la vitesse de chauffage du flan ou de la tôle entre 50 et 500°C est comprise entre 15 et 35°C/s.

Préférentiellement, la couche d'aluminium ou d'alliage d'aluminium occupe plus de 50% de l'épaisseur du prérevêtement.

Selon un mode préféré, les éléments du polymère sont sélectionnés dans une liste constituée de C, H, O, N.

L'invention a également pour objet un procédé de fabrication d'un flan soudé embouti à chaud et durci à la presse, comprenant les étapes successives selon lesquelles :

- on approvisionne un flan soudé réalisé par soudage d'au moins deux flans, comprenant
- au moins un flan 7 selon l'une quelconque des caractéristiques ci-dessus, d'épaisseur $e_7$,
- au moins un flan 8 d'épaisseur $e_8$ constitué d'un substrat d'acier revêtu d'une couche d'aluminium ou d'alliage d'aluminium d'un pré-revêtement identique à celui du flan 7,
- l'épaisseur des flans 7 et 8 étant telle que $\dfrac{e_7}{e_8} > 1$
- on chauffe le flan soudé de manière à réaliser une interdiffusion entre le substrat d'acier et le pré-revêtement et de manière à conférer une structure partiellement ou totalement austénitique à l'acier, puis
- on emboutit le flan soudé pour obtenir un flan soudé embouti à chaud, puis
- on refroidit le flan soudé embouti à chaud par maintien dans l'outil d'emboutissage de manière à obtenir, au moins dans une partie du substrat du flan soudé embouti à chaud, de la martensite et/ou de la bainite.

Préférentiellement, le flan soudé, embouti à chaud et durci selon est caractérisé en ce que le flan 7 est revêtu

$$2{,}6 \geq \frac{e_7}{e_8} \geq 2{,}2.$$

sur la totalité du pré-revêtement, de la couche polymérisée 3, et en ce que :

D'autres caractéristiques et avantages de l'invention apparaîtront au cours de la description ci-dessous donnée à titre d'exemple et faite en référence aux figures jointes suivantes :

La figure 1 présente un exemple schématique de tôle ou de flan pré-revêtu selon l'invention, avant emboutissage à chaud.

La figure 2 illustre un exemple schématique de flan soudé selon l'invention, dans lequel les deux flans n'ont pas la même épaisseur.

La figure 3 illustre un exemple schématique de flan selon l'invention, destiné à être soudé par Laser puis embouti à chaud.

La figure 4 illustre schématiquement un exemple de la constitution des couches observées sur pièce emboutie à chaud selon l'invention.

On notera que ces schémas ne visent pas à reproduire à l'échelle les dimensions relatives des différents éléments constitutifs.

La figure 5 présente des profils d'analyse superficielle de la teneur en oxygène, après chauffage à 900°C puis emboutissage à chaud et durcissement par trempe sous presse.

La figure 6 présente des profils d'analyse superficielle de la teneur en carbone, après chauffage à 900°C, puis emboutissage à chaud et durcissement par trempe sous presse.

La figure 7 présente des profils d'analyse superficielle en carbone, oxygène et silicium après traitement à 900°C, puis emboutissage à chaud et durcissement par trempe sous presse, d'un flan pré-revêtu non conforme à l'invention. La figure 8 montre l'aspect de la surface d'une pièce emboutie à chaud selon l'invention, par comparaison avec une pièce emboutie à chaud ne comportant pas de dépôt préalable de couche de polymère avec des pigments carbonés, cette dernière étant illustrée à la figure 9.

L'épaisseur de la tôle d'acier mise en oeuvre dans le procédé selon l'invention est comprise préférentiellement entre 0,5 et 4 mm environ, gamme d'épaisseur utilisée notamment dans la fabrication de pièces structurales ou de renfort pour l'industrie automobile.

L'acier du substrat est un acier pour traitement thermique, c'est-à-dire un acier capable de durcissement après austénitisation et refroidissement rapide par trempe.

A titre d'exemple, l'acier contient avantageusement les éléments suivants, la composition étant exprimée en poids :

- une teneur en carbone comprise entre 0,07 et 0,5%, préférentiellement entre 0,09 et 0,38% en poids, et très préférentiellement entre 0,15 et 0,25% en poids. Cet élément joue un grand rôle sur la trempabilité et sur la résistance mécanique obtenue après le refroidissement qui suit le traitement d'austénitisation. Au-dessous d'une teneur de 0,07% en poids, l'aptitude à la trempe est réduite et la résistance mécanique en traction est insuffisante après durcissement par trempe sous presse. Une teneur de 0,15%C permet de garantir une trempabilité suffisante dans les zones les plus déformées à chaud. Au-delà d'une teneur de 0,5 % en poids, le risque de formation de défauts est accru lors de la trempe, particulièrement pour les pièces de plus forte épaisseur. Il devient également difficile de garantir une ductilité lors du pliage de pièces après durcissement par trempe sous presse. Une teneur en carbone comprise entre 0,09 et 0,38% permet d'obtenir une résistance à la traction Rm comprise entre 1000 et 2050 MPa environ lorsque la microstructure de la pièce est totalement martensitique.

- outre son rôle de désoxydant, le manganèse a également un effet important sur la trempabilité en particulier lorsque sa teneur en poids est supérieure à 0,5%, et préférentiellement supérieure à 0,8%. Cependant, il est préférable de limiter son addition à 3% en poids, et très préférentiellement de la limiter à 1,5% de façon à éviter une ségrégation excessive.

- la teneur en silicium de l'acier doit être comprise entre 0,02 et 0,5 % en poids, et de préférence entre 0,1 et 0,35%. Outre son rôle sur la désoxydation de l'acier liquide, cet élément contribue au durcissement de l'acier mais sa teneur doit être cependant limitée pour éviter la formation excessive d'oxydes et pour ne pas nuire à la revêtabilité au trempé.

- au delà d'une teneur supérieure à 0,01%, le chrome augmente la trempabilité et contribue à l'obtention d'une résistance importante après l'opération de formage à chaud. Au delà d'une teneur égale à 1%, préférentiellement 0,3%, l'effet du chrome sur l'homogénéité des propriétés mécaniques dans la pièce, est saturé.

- l'aluminium est un élément favorisant la désoxydation et la précipitation de l'azote. En quantité excessive il se forme des aluminates grossiers lors de l'élaboration qui tendent à diminuer la ductilité, ce qui conduit à limiter la teneur en aluminium à 0,25 % en poids. Une teneur minimale de 0,001% permet de désoxyder l'acier à l'état liquide lors de l'élaboration.

- en quantités excessives, le soufre et le phosphore conduisent à une fragilité accrue. C'est pourquoi il est préférable de limiter leur teneur respective à 0,05 et 0,1 % en poids.

- le bore, dont la teneur doit être comprise entre 0,0005 et 0,010 % en poids, et de préférence entre 0,002 et 0,005% en poids, est un élément qui joue un rôle important sur la trempabilité. Au-dessous d'une teneur de 0,0005%, on n'obtient pas un effet suffisant sur la trempabilité. Le; plein effet est obtenu pour une teneur de 0,002%. La teneur maximale en bore doit être inférieure à 0,010%, et préférentiellement 0,005%, pour ne pas dégrader la ténacité.

- Le titane a une forte affinité pour l'azote. Il protège le bore de façon à ce que cet élément se trouve sous forme libre pour jouer son plein effet sur la trempabilité. Au-delà de 0,2%, il existe cependant un risque de former des nitrures de titane grossiers dans l'acier liquide qui jouent un rôle néfaste sur la ténacité. Il est compris préférentiellement entre 0,02 et 0,1%.

- A titre optionnel, l'acier peut également comprendre du tungstène en quantité comprise entre 0,001 et 0,3%% en poids. Dans les quantités indiquées, cet élément augmente la trempabilité et l'aptitude au durcissement grâce à la formation de carbures.

- A titre optionnel, l'acier peut également contenir du calcium en quantité comprise entre 0,0005 et 0,005% : en se combinant avec l'oxygène et le soufre, le calcium permet d'éviter la formation d'inclusions de grande taille qui sont néfastes pour la ductilité des tôles ou des pièces ainsi fabriquées.

Le reste de la composition de l'acier est constitué de fer et d'impuretés inévitables résultant de l'élaboration.

A titre préférentiel, on utilisera l'acier 22MnB5 contenant en poids : 0,20-0,25%C, 1,1-1,35%Mn, 0,15-0,35%Si, 0,02-0,06%Al, 0,02-0,05%Ti, 0,02-0,25%Cr, 0,002-0,004%B, le solde étant du fer et des impuretés inévitables. Le substrat d'acier comporte un pré-revêtement d'aluminium ou un alliage d'aluminium. Dans ce dernier cas, le revêtement contient donc une teneur en aluminium supérieure à 50% en poids. Ce pré-revêtement, fabriqué préférentiellement par trempé en continu, est avantageusement un alliage aluminium-silicium comprenant en poids 7-15% de silicium, 2 à 4% de fer, optionnellement entre 15 et 30 ppm de calcium, le reste étant de l'aluminium et des impuretés inévitables résultant de l'élaboration.

Le pré-revêtement peut être également un alliage d'aluminium contenant 40-45%Zn, 3-10%Fe, 1-3%Si, le solde étant de l'aluminium et des impuretés inévitables résultant de l'élaboration.

Le pré-revêtement peut être également composé d'une superposition de couches déposées par étapes successives, dont au moins une des couches est de l'aluminium ou un alliage d'aluminium. La couche d'aluminium ou d'alliage d'aluminium (ou, s'il existe plusieurs couches de cette nature, la somme des épaisseurs de ces couches) occupe de préférence plus de 50% de l'épaisseur du prérevêtement.

Ce pré-revêtement est surmonté, au moins sur l'une des faces principales de la tôle, d'une couche polymérisée contenant des pigments carbonés. Cette couche peut être déposée sur la totalité du pré-revêtement métallique ou seulement sur une partie de celui-ci. Dans ce dernier cas, les effets conférés par cette couche, décrits ci-dessous, sont obtenus dans les zones où la couche est présente. Pour ce qui concerne particulièrement les effets thermiques de cette couche, ceux-ci s'appliquent également dans une moindre mesure aux zones avoisinant localement celles où la couche a été déposée.

Cette couche polymérisée peut être notamment obtenue par les modes suivants :

- à partir d'une résine sous forme de dispersion ou d'émulsion en phase aqueuse. On pourra notamment utiliser une résine de type acrylique.
- à partir d'une résine sous forme de solution dans un solvant non aqueux. On pourra notamment utiliser une résine de type époxy, par exemple époxy-phénolique, ou acrylique
- à partir d'un film polymère thermoplastique colaminé à la tôle substrat. On pourra notamment utiliser un film polyéthylène-téréphtalate ou polyéthylène ou polybutylène-téréphtalate ou polypropylène.

Pour des raisons de productivité et de régularité d'épaisseur, le dépôt de cette couche peut être effectué préférentiellement au rouleau (« roll coating ») Après polymérisation et/ou séchage, on obtient une couche polymérisée dont l'épaisseur est comprise entre 2 et 30 micromètres. Une épaisseur inférieure à deux micromètres ne permet pas d'obtenir un taux de couvrance suffisant pour mettre en oeuvre le procédé. Une épaisseur supérieure à 30 micromètres conduit à un risque accru de pollution des fours lors du chauffage ultérieur.

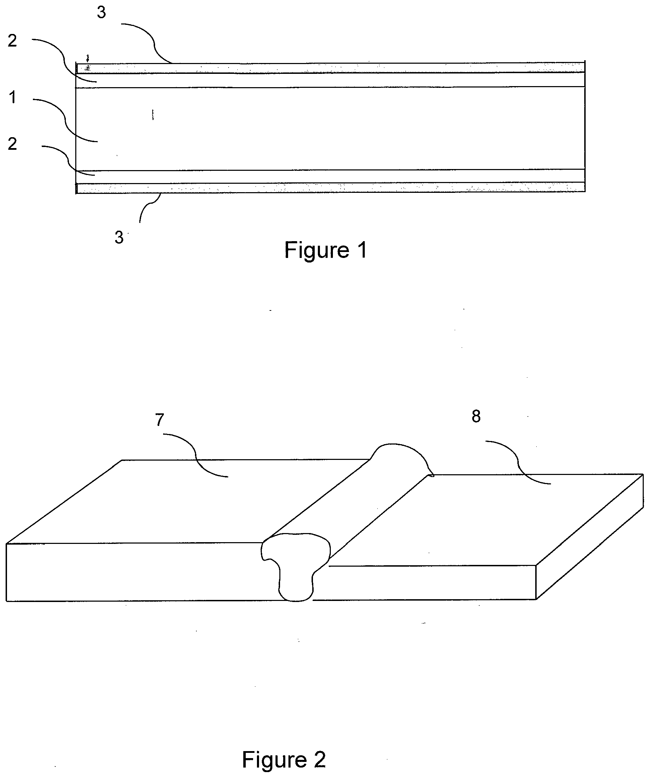

La tôle ou le flan pré-revêtu sont représentés schématiquement à la figure 1. La figure 1 illustre le substrat d'acier pour traitement thermique 1 surmonté d'un pré-revêtement métallique 2, lui-même surmonté d'une couche polymérisée 3 contenant les pigments carbonés.

A ce stade, le substrat d'acier n'est pas encore durci, c'est-à-dire qu'il ne comporte pas, ou comporte peu de constituants issus de trempe, par exemple moins de 10% de martensite. La tôle ou le flan se présentent sous une forme sensiblement plane.

Dans le procédé de durcissement sous presse, le substrat d'acier est chauffé à une température $T\gamma$ conduisant à son austénitisation au moins partielle de manière à réaliser une transformation martensitique ou bainitique lors du refroidissement ultérieur. Si l'on souhaite chauffer une tôle revêtue d'une peinture à une telle température, il serait alors naturel de choisir une peinture résistant à une température T supérieure à $T\gamma$, c'est dire dont le liant conserve sa fonction envers les pigments de la peinture. Il est connu que les peintures résistant à haute température sont généralement des résines de silicone, de polysiloxane, contenant donc du silicium. En effet, celles-ci sont à base de chaines Si-O-Si contenant des liaisons très stables, résistant à haute température. Or les inventeurs ont mis en évidence de façon surprenante qu'il convenait de mettre en oeuvre des polymères ne contenant pas de silicium. Des effets avantageux, exposés ci-dessous, sont obtenus lorsque les éléments constitutifs des polymères sont choisis parmi le carbone, l'hydrogène, l'oxygène ou l'azote. Lors du chauffage, ces polymères se décomposent à une température inférieure à $T\gamma$ et se combinent en partie avec l'oxygène de l'atmosphère du four. Il était alors attendu que les pigments de la peinture, dépourvus de liant, ne soient plus adhérents au substrat et s'en désolidarisent. On pouvait également craindre qu'il ne subsiste après chauffage, une couche provenant de la décomposition de la peinture qui empêcherait une mise en oeuvre ultérieure par cataphorèse ou par soudage par résistance. Or les inventeurs ont mis en évidence d'une façon surprenante que ces conséquences néfastes ne se produisaient pas dans les conditions de l'invention.

La teneur en azote de la couche polymérisée 3 doit être limitée à 1%, préférentiellement 0,5%, et très préférentiellement 0,2%, sous peine de former des composés du type HCN ou de l'ammoniac en quantité trop importante, lors du chauffage à la température nécessaire à l'emboutissage. La teneur pondérale des pigments carbonés, exprimée par rapport à la couche polymérisée 3, est comprise entre 3 et 30%: au dessous de 3%, la réduction de la durée du cycle de chauffage est insuffisante. Au-delà de 30%, le mélange présente une viscosité impropre au dépôt. Dans cette gamme de teneurs, la pièce obtenue après emboutissage à chaud ne présente pratiquement pas d'enrichissement superficiel en carbone, comme il sera montré ci-dessous.

Les pigments carbonés peuvent être sous forme de graphite ou de carbone activé. Ce dernier, qui est obtenu par une étape de carbonisation à haute température, possède une structure amorphe et une surface spécifique importante qui lui confère un fort pouvoir adsorbant. La teneur pondérale du carbone activé, exprimée par rapport à la couche déposée, doit être inférieure à 5% de façon à être apte à un mélange avec le polymère.

Les flans comportant le pré-revêtement métallique et la couche de polymère contenant les particules de carbone sont chauffés dans un four sous atmosphère ordinaire depuis la température ambiante jusqu'à une température Ty, usuellement aux environs de 900°C, qui permet l'emboutissage à chaud ultérieur. Lors du chauffage, le carbone de la couche reste présent sur la surface du flan pendant la plus grande partie de cette étape de chauffage, c'est-à-dire que son effet sur la réflectivité s'exerce sur la majorité de cette étape dont il contribue donc à réduire très notablement la durée. Dans les conditions de l'invention, les inventeurs ont constaté qu'il se combinait progressivement durant le chauffage avec l'oxygène du four et disparaissait presque complètement lorsque le flan atteignait la température T$\gamma$. Les inventeurs ont également constaté que l'application de la peinture selon l'invention ne nécessitait pas de traitement de sablage ultérieur afin d'éliminer une éventuelle couche d'oxyde néfaste vis-à-vis d'une peinture ultérieure par cataphorèse. L'application de la peinture selon l'invention ne modifie pas l'aptitude au soudage par résistance des pièces après emboutissage à chaud, si bien qu'il n'est pas nécessaire de modifier les réglages des machines de soudage. De plus, comme il sera montré ci-dessous, le procédé de l'invention permet d'augmenter la résistance à la fissuration différée des pièces embouties à chaud, en raison de la diminution de la teneur en hydrogène diffusible. L'application de la peinture selon l'invention ne diminue pas la résistance à la corrosion des pièces embouties à chaud.

L'invention peut être mise en oeuvre selon un mode particulier présenté à la figure 2 qui illustre schématiquement un flan soudé comprenant deux flans 7 et 8 d'épaisseurs respectives $e_7$ et $e_8$ telles que $\dfrac{e_7}{e_8} > 1.$ Ces deux flans comprennent un substrat d'acier pré-revêtu d'aluminium ou d'alliage d'aluminium, le pré-revêtement étant identique sur les deux flans. Le joint soudé peut être réalisé par tout procédé approprié, et notamment par soudage à l'arc ou par faisceau Laser. Si un tel joint soudé est chauffé de manière à être embouti à chaud, l'épaisseur différente des parties constitutives conduit à une cinétique de chauffage différente dans ces deux parties, le flan 7 étant chauffé à une vitesse moins rapide que le flan 8 plus mince. Ceci peut alors conduire à des microstructures et des propriétés différentes dans le substrat et dans le revêtement des parties 7 et 8, après emboutissage à chaud. Dans certains cas, il n'est pas possible de déterminer des conditions opératoires, telles que température de chauffage et durée de maintien, satisfaisantes pour obtenir les propriétés recherchées dans les différentes zones constitutives du joint soudé.

Selon l'invention, on dépose une couche de polymère décrit ci-dessus, afin d'obtenir une couche polymérisée contenant 3 à 30% de pigments carbonés, sur le flan 7 le plus épais. Le flan 8 le plus mince ne comporte pas de telle couche sur le pré-revêtement d'aluminium ou d'alliage d'aluminium. En fonction de l'homogénéité souhaitée des propriétés sur la pièce emboutie à chaud, il est possible de déposer la couche sur la totalité du flan 7 ou sur une partie seulement. Le flan soudé est ensuite placé dans un four. L'application préalable de la couche de peinture permet d'augmenter l'émissivité du flan 7 et de réduire la différence de vitesse de chauffage entre les deux flans 7 et 8 résultant de leur différence d'épaisseur.

Les inventeurs ont montré que lorsque l'approvisionnement des flans est tel que : $2,6 \geq \dfrac{e_7}{e_8} \geq 2,2,$ la durée de chauffage est pratiquement la même dans les parties 7 et 8, car l'application de la couche de peinture selon l'invention modifie l'émissivité de façon à compenser presque complètement l'effet de la différence d'épaisseur des flans 7 et 8 sur le cycle de chauffage, ce qui garantit une excellente homogénéité des propriétés de la pièce après emboutissage à chaud et durcissement sous presse.

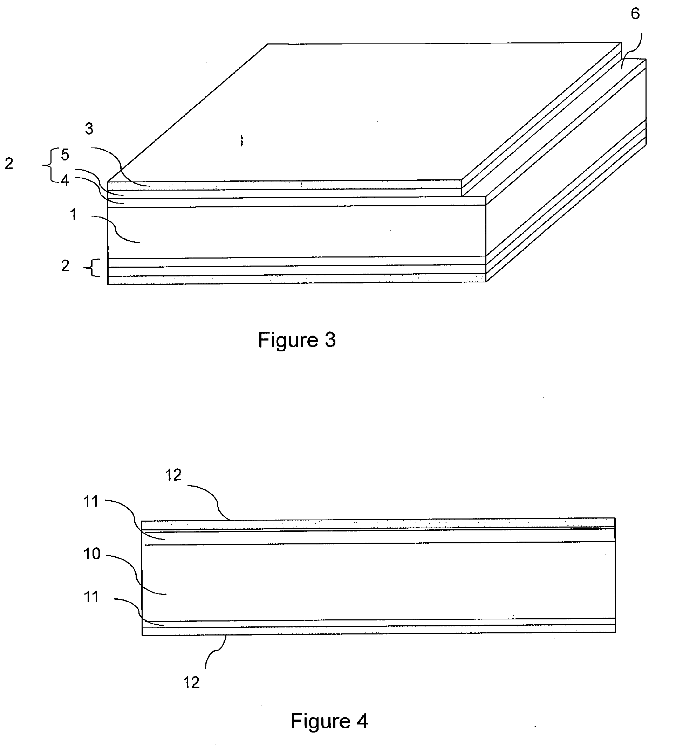

Les flans 7 et 8 peuvent être pré-revêtus par exemple d'un alliage aluminium-silicium comprenant en poids 7-15% de silicium, 2 à 4% de fer, optionnellement entre 15 et 30 ppm de calcium, le reste étant de l'aluminium et des impuretés inévitables résultant de l'élaboration. Dans ces conditions, comme l'illustre schématiquement la figure 3, le pré-revêtement 2 comprend une couche d'alliage intermétallique 4 de quelques micromètres d'épaisseur comprenant majoritairement $Fe_2Al_3$, $Fe_2Al_5$ et $Fe_xAl_ySi_z$, en contact avec le substrat d'acier 1. Cette couche intermétallique 4 est surmontée par une couche d'alliage métallique Al-Si-Fe 5. Sur le flan 7 le plus épais, cette couche 5 est elle-même surmontée par une couche de polymère 3 décrite ci-dessus, contenant 3 à 30% de pigments carbonés. Afin d'éviter la formation de composés intermétalliques fragiles dans la zone fondue lors du soudage, on ôte la couche d'alliage métallique 5 sur la périphérie des flans, en laissant en place la fine couche d'alliage intermétallique 4. Cette ablation locale peut être réalisée par tout moyen, notamment par fusion et vaporisation grâce à un Laser pulsé. Les inventeurs ont mis en évidence que la présence de la couche de polymère avec des pigments carbonés ne gênait pas l'ablation qui peut être réalisée dans des conditions de productivité satisfaisantes. A titre indicatif, les résultats recherchés peuvent obtenus en utilisant une puissance Laser de 50 W à 1,5 kW, une vitesse d'ablation de l'ordre de 3 à 6 m/mn, une longueur d'onde de 300 à 1500 nm.

La figure 3 illustre un exemple où l'on a ôté sur un bord d'un flan pré-revêtu peint, la couche de peinture 3 et la couche d'alliage métallique 5. Le revêtement intermétallique 4 affleure donc à la surface 6 après cette ablation.

La figure 3 présente un exemple où l'ablation a été réalisée sur une seule face du flan. Il est également possible d'effectuer cette ablation sur les deux faces lorsque l'on souhaite minimiser la quantité d'aluminium introduite dans le métal fondu de la soudure par refusion.

La soudure des flans intervient le long du bord où l'ablation a été réalisée, ceux-ci sont ensuite chauffés puis emboutis à chaud et durcis à la presse. Les inventeurs ont montré que le procédé selon l'invention permet de fabriquer des pièces embouties à chaud présentant une bonne aptitude à la soudabilité par point et à la peinture par cataphorèse, une bonne résistance à la corrosion et à la fissuration différée.

A titre d'exemples non limitatifs, les modes de réalisation suivants vont illustrer des avantages conférés par l'invention.

Exemple 1 :

On a approvisionné des flans de 1mm d'épaisseur d'acier ayant pour composition en poids : 0,228% C, 1,189% Mn, 0,014% P, 0,001% S, 0,275% Si, 0,028% Al, 0,034% Ti, 0,003% B, 0,177% Cr, le reste étant du fer et des impuretés résultant de l'élaboration. Ces flans comportent un pré-revêtement de 24 micromètres d'épaisseur sur chaque face, contenant 9% en poids de silicium, 3% en poids de fer, le solde étant de l'aluminium et des impuretés inévitables. On a ensuite déposé sur certains des flans, par application au rouleau sur la totalité des deux faces, une couche composée de polymère et de pigments carbonés, en phase aqueuse, dans les différentes conditions indiquées dans le tableau ci-dessous. La résine acrylique-phénoxy contient moins de 0,2% d'azote sur couche déposée. La teneur pondérale de pigments en carbone de ces couches déposées au rouleau est indiquée dans le tableau 1 ci-dessous. Les couches déposées ont été séchées par passage en étuve à 70°C pendant 5 minutes.

Tableau 1. Conditions d'essai

| Essai | Nature du polymère de la couche déposée sur le pré-revêtement | Teneur pondérale de pigments de carbone activé, exprimée par rapport à la couche après séchage (%) | Teneur pondérale de pigments de carbone graphite, exprimée par rapport à la couche après séchage (%) | Epaisseur de la couche déposée après séchage (micromètres) |
|---|---|---|---|---|
| I1 | Résine acrylique-phénoxy | 5 | - | 15 |
| I2 | Résine acrylique-phénoxy | - | 15 | 15 |
| I3 | Résine acrylique-phénoxy | 1 | 12 | 15 |
| I4 | Résine acrylique-phénoxy | 1 | 12 | 11 |
| I5 | Résine acrylique-phénoxy | 1 | 12 | 26 |
| R1 | Polysiloxane | 0 | 0 | 30 |
| R2 | Sans revêtement polymère ni pigments carbone | - | - | - |
| (I= Invention, R= Référence) | | | | |

Des analyses thermogravimétriques révèlent que la résine acrylique se décompose en majorité vers 400°C.

Des flans d'acier préparés dans les conditions du tableau ci-dessus ont été chauffés depuis la température ambiante jusqu'à 900°C dans un four sous atmosphère ordinaire, maintenus une minute à cette température, puis emboutis à chaud et durcis par trempe en les maintenant dans l'outil d'emboutissage. Le refroidissement rapide ainsi obtenu confère une structure martensitique au substrat d'acier. La résistance mécanique Rm est d'environ 1500 MPa.

Le cycle thermique provoque une alliation du fer du substrat avec le revêtement, créant ainsi des alliages intermétalliques contenant essentiellement de l'aluminium, du fer et du silicium.

Dans chacune des conditions ci-dessus, on a mesuré au moyen de thermocouples la durée de chauffage $\Delta t_{20}^{900}$, c'est-à-dire le délai s'écoulant entre l'instant où le flan est à température ambiante et celui où il atteint 900°C. Les résultats sont portés au tableau 2.

Tableau 2- Durée de chauffage de 20 à 900°C

| Essai | $\Delta t_{20}^{900}$ (s) |
|---|---|
| I1 | 70 |
| I2 | 70 |
| I3 | 70 |
| I4 | 70 |
| I5 | 70 |
| R1 | 68 |
| R2 | 165 |

L'application d'une couche polymérisée comportant des pigments en carbone (essais I1 à I5 et R1) permet de réduire de plus de 50% la durée de chauffage par rapport au pré-revêtement métallique seul (essai R2)

On a également mesuré la vitesse moyenne obtenue lors du chauffage entre 50 et 500°C, sur des flans préparés dans les conditions I3 et R2, d'épaisseur comprise entre 1 et 2mm. Le tableau 3 indique les résultats obtenus.

Tableau 3 : Vitesse de chauffage entre 50 et 500°C

| Essai | Epaisseur (mm) | V20-500°C (°C/s) |
|---|---|---|
| I3 | 1 | 31 |
| | 1,5 | 22 |
| | 2 | 16 |
| R2 | 1 | 12 |
| | 1,5 | 10 |
| | 2 | 7 |

Dans les conditions de l'invention, on met ainsi en évidence qu'il est possible d'obtenir une vitesse de chauffage comprise entre 15 et 40°C/s entre 50 et 500°C, pour toute la gamme d'épaisseur, alors que cette vitesse reste inférieure à 12°C/s, dans les conditions de référence R2.

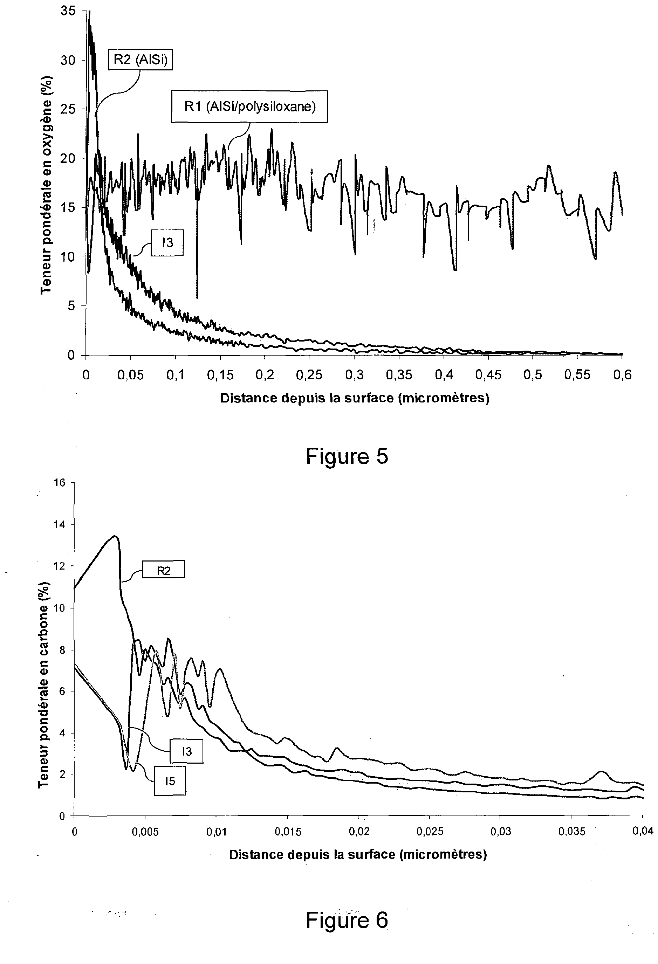

La figure 5 illustre les analyses d'oxygène par Spectroscopie à Décharge Luminescente réalisées sur des flans chauffés à 900°C puis trempés. Celles-ci expriment la variation de la teneur pondérale en oxygène en fonction de l'épaisseur, à partir de la surface des pièces durcies sous presse. Par rapport aux essais de référence R1 (revêtement à base de polysiloxane) et R2 (pré-revêtement métallique sans application de peinture), l'application de résine et de pigments carbonés selon l'invention (I3) conduit à une diminution de la couche d'oxyde en extrême surface : dans le cas de l'essai I3, la teneur moyenne en oxygène mesurée entre 0 et 0,01 micromètre sous la surface est de 16,7%, alors qu'elle est de 30,3% pour l'essai R2. Cette diminution de la teneur moyenne en oxygène en surface permet de diminuer la résistance de contact, ce qui confère une meilleure aptitude au soudage par résistance par points. Sans être lié par une théorie, on pense que le dépôt de la couche de polymère selon l'invention protège dans une certaine mesure, la couche d'alliage d'aluminium sous-jacente, et réduit la formation d'alumine en surface.

Dans les autres essais I4 et I5, on constate que la variation de la teneur en oxygène en fonction de la profondeur, est très semblable à celle illustrée pour I3 à la figure 5.

Dans le cas de l'essai R1, l'utilisation d'un polymère à base de polysiloxane conduit à une formation d'une épaisse couche d'oxyde : la teneur moyenne en oxygène mesurée entre 0,1 et 0,2 micromètres sous la surface est de 18%, alors que celle-ci est inférieure à 10% dans les conditions de l'invention : 3,8% dans l'essai I3, 3% pour l'essai I4, 4,8% pour l'essai I5. Dans le cas de l'essai R1, pour réaliser une peinture ultérieure par cataphorèse, il est nécessaire d'ôter la couche d'oxyde par des traitements de sablage ou de grenaillage coûteux, alors que ceux-ci ne sont pas nécessaires dans le cas de l'invention puisque la couche d'oxyde a une épaisseur nettement plus faible.

Dans les essais I3-I5 selon l'invention, la teneur en oxygène superficiel après durcissement sous presse, dépend peu de l'épaisseur de la couche polymérisée déposée sur le pré-revêtement, comme le montre le tableau ci-dessous.

Tableau 4 : caractéristiques de la teneur en oxygène en surface en fonction de l'épaisseur du dépôt de polymère sur le pré-revêtement

| Essai | Epaisseur de la couche déposée après séchage (micromètres) | Teneur moyenne en oxygène entre 0 et 0,01 micromètre sous la surface (%) | Teneur moyenne en oxygène entre 0,1 et 0,2 micromètres sous la surface (%) |
|---|---|---|---|
| I4 | 11 | 17,5 | 3 |
| I3 | 15 | 16,6 | 3,8 |
| I5 | 26 | 14,4 | 4,8 |

Ceci signifie que l'étape initiale de dépôt de la couche de polymère avec les particules de carbone peut être réalisée avec une certaine tolérance en épaisseur et ne nécessite donc pas la mise en oeuvre de procédés spécifiques coûteux de dépôt.

On observe à la figure 6 que le dépôt de pigments carbonés avec un polymère dans les conditions de l'invention (essais I3 et I5) ne provoque pas d'enrichissement superficiel significatif en carbone par rapport à la situation de référence R2. Contrairement à ce qui était attendu, les inventeurs ont mis en évidence que l'addition de pigments carbonés réduisait même la teneur en carbone en extrême surface après le traitement de durcissement sous presse. Ceci indique qu'une réaction du carbone avec l'oxygène de l'atmosphère intervient de façon presque complète lors de la phase de chauffage du flan dans le four.

Dans les conditions de l'invention, des essais interrompus à différentes températures lors du chauffage révèlent que le carbone reste présent sur la surface du flan pendant la plus grande partie de cette étape, c'est-à-dire que son effet sur la réflectivité s'exerce directement pendant une très grande partie du cycle thermique. Mais, comme on l'a indiqué, la combinaison progressive de l'oxygène de l'atmosphère avec le carbone conduit à une disparition presque complète de ce dernier élément lorsque le flan atteint la température de 900°C.

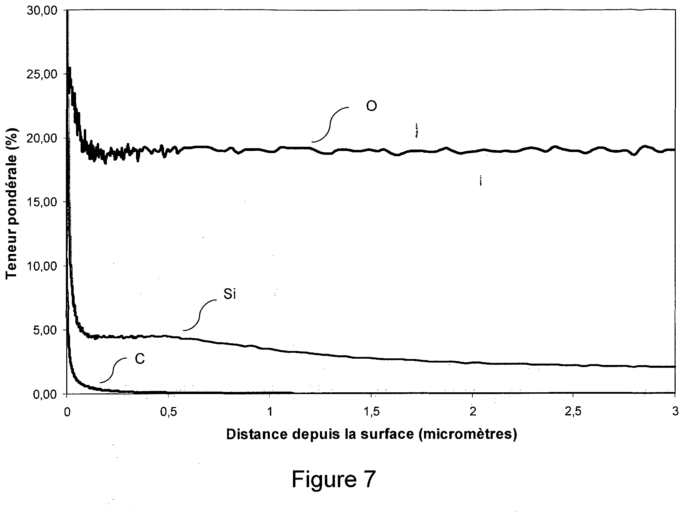

Dans le cas d'un dépôt effectué dans des conditions de référence (R1), on présente à la figure 7 les variations des teneurs pondérales en carbone, oxygène et silicium mesurées sur les pièces obtenues par chauffage à 900°C, maintien une minute à cette température, puis emboutissage à chaud et trempe sous presse. Outre une teneur en oxygène plus élevée que dans les essais selon l'invention I3-I5, on note une augmentation sensible de la teneur superficielle en silicium, celui-ci se trouvant sous forme d'oxyde qui modifie l'aptitude au soudage par résistance, en raison de la forte augmentation de la résistance de contact, supérieure à 1,5 milliohms

On a évalué la soudabilité par résistance par point de pièces réalisées selon les conditions I2 et R2, en réalisant des points soudés sous un effort de soudage de 350 daN. On évalue la largeur du domaine de soudabilité par la différence entre l'intensité minimale $I_{min}$ permettant d'obtenir un diamètre de point de 6mm associé à une tenue mécanique satisfaisante, et l'intensité maximale $I_{max}$ au-delà de laquelle on constate une expulsion de métal liquide lors du soudage. La largeur du domaine de soudabilité ($I_{max}$- $I_{min}$) est d'environ 1500 A, équivalente pour les conditions I2 et R2. De même, on constate que les résultats d'essais de traction en croix sur les points soudés sont identiques : pour une intensité de soudage $I_{min}$, la résistance mécanique est égale à 3370 N (condition R2) et à 3300 N (condition I2) Pour une intensité de soudage $I_{max}$, la résistance mécanique est égale à 4290 N (condition R2) et à 4127 (condition I2) Ainsi, l'application de polymère et de particules de carbone selon l'invention ne modifie pas l'aptitude au soudage par points. L'invention peut être mise en oeuvre sans modifier les réglages des machines de soudage, il est possible de souder une tôle prérevêtue d'aluminium ou d'alliage d'aluminium avec un dépôt de polymère et de carbone selon l'invention, et une tôle uniquement prérevêtue, en étant assuré que les conditions de soudage seront bien adéquates pour ces deux types de tôles.

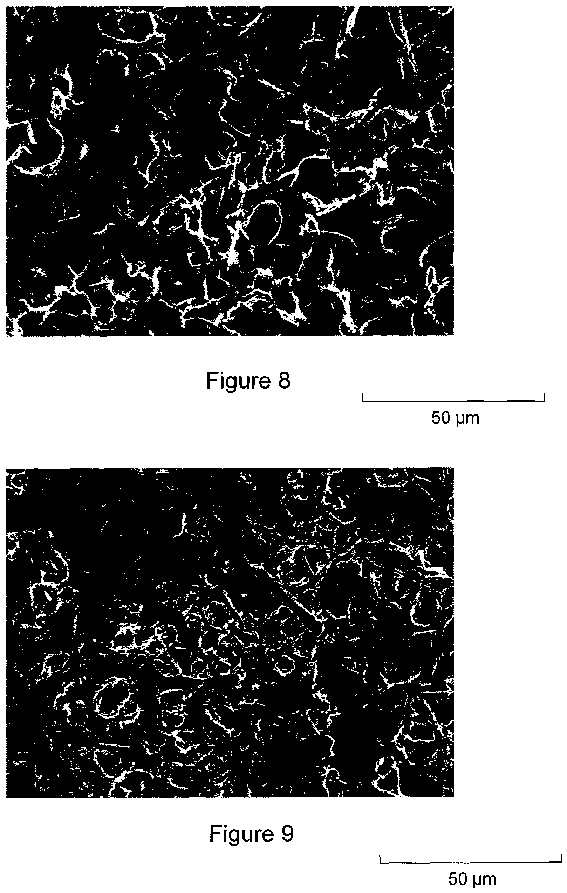

Les surfaces de pièces embouties à chaud et durcies dans les conditions I1-3 et R2 ont observées zénithalement au Microscopie Electronique à Balayage. Dans la condition de référence (R2, figure 8), la rugosité superficielle est importante, ce qui garantit une bonne aptitude à la peinture par cataphorèse ultérieure. On observe à la figure 9 que la rugosité superficielle de la pièce réalisée dans la condition de l'invention (I2) est similaire. Des observations identiques ont été réalisées pour les conditions I1 et I3 Comme on a vu précédemment que la surface des pièces fabriquées selon l'invention n'était pas enrichie en carbone, ceci garantit que l'aptitude à la cataphorèse n'est pas réduite par l'application préalable du polymère et des pigments carbonés.

Exemple 2 :

On a évalué la résistance à différentes formes de corrosion de pièces embouties à chaud et durcies sous presse, réalisées selon les conditions I2 (prérevêtement AlSi et peinture selon l'invention) et R2 (prérevêtement AlSi seul) du tableau 1.

La résistance à la corrosion cosmétique a été déterminée dans les conditions suivantes : on a effectué des rayures de différentes profondeurs, affectant uniquement le revêtement (condition A) ou affectant également le substrat (condition B) de pièces embouties à chaud. Celles-ci ont été soumises à des alternances cycliques de température et d'humidité en brouillard salin pendant six semaines dans les conditions décrites dans l'essai « new VDA 233-102 » connu en lui-même. On a mesuré ensuite la largeur de cloquage au niveau de la rayure. Les résultats sont présentés au tableau 5.

Tableau 5- Résultats de corrosion cosmétique

|  | Largeur de cloquage (mm) Condition A | Largeur de cloquage (mm) Condition B |
|---|---|---|
| I2 | 2,7 | 4 |
| R2 | 2,6 | 4,2 |

Par rapport à l'essai de référence R2, on constate que l'application de la peinture selon l'invention ne diminue pas la résistance à la corrosion cosmétique.

La résistance à la corrosion perforante a été évaluée par des essais menés durant douze semaines dans les conditions de l'essai « new VDA » mentionné ci-dessus. Les pertes de masse mesurées pour les pièces fabriquées dans les conditions I2 et R2 sont les suivantes :

Tableau 6- Résultats de corrosion cosmétique

|  | Perte de masse ($g/m^2$) |
|---|---|
| I2 | 170 |
| R2 | 180 |

Par rapport à l'essai de référence R2, l'application de la peinture selon l'invention ne diminue pas la résistance à la corrosion perforante.

Des pièces de 1mm embouties à chaud réalisées selon les conditions I2 et R2 ont subi une peinture par cataphorèse. On a mesuré l'adhérence de cette couche de cataphorèse après rayures en quadrillage, puis immersion dans l'eau à 50°C pendant 10 jours. On constate que l'application de la peinture selon l'invention ne diminue pas l'adhésion de la couche de cataphorèse.

Exemple 3 :

Des flans d'acier 22MnB5 de 1, 5 et 2mm d'épaisseur comportant sur leurs deux faces un pré-revêtement de 23 micromètres d'épaisseur, contenant 9% de Si et 3% de Fe, le reste étant de l'aluminium et des impuretés inévitables, ont été approvisionnés. On a déposé sur certains des flans, par application au rouleau sur la totalité des deux faces principales, une couche composée de polymère et de pigments carbonés, dans la condition I2 selon l'invention indiquée au tableau 1. Les autres flans n'ont pas été peints (condition R)

Les flans ont été chauffés à 900°C, maintenus une minute à cette température puis emboutis à chaud et durcis par maintien dans l'outil d'emboutissage. On a mesuré la teneur en hydrogène diffusible grâce à une méthode d'analyse de désorption thermique (ou « Thermal Desorption Analysis) connue en elle-même. La teneur en hydrogène diffusible de ces flans est rapportée au tableau 7.

Tableau 7- Teneur en hydrogène diffusible

| Revêtement | Epaisseur du flan (mm) | Teneur en hydrogène diffusible (ppm) |
|---|---|---|
| I2 | 1,5 | 0,15 |
| R | 1,5 | 0,21 |
| I2 | 2 | 0,17 |

(suite)

| Revêtement | Epaisseur du flan (mm) | Teneur en hydrogène diffusible (ppm) |
|---|---|---|
| R | 2 | 0,25 |

Le dépôt de la peinture spécifique de l'invention permet de réduire très notablement la teneur en hydrogène diffusible. Sans être lié par une théorie, les inventeurs pensent que l'application du dépôt selon l'invention réduit la durée pendant laquelle l'hydrogène peut être adsorbé au cours de l'étape de chauffage avant emboutissage. L'invention permet donc de diminuer notablement la sensibilité à la fissuration différée des pièces embouties à chaud et durcies. La mise en oeuvre de l'invention permet donc d'utiliser des aciers dont la composition plus chargée en éléments d'alliage conduit à une résistance mécanique plus élevée après emboutissage à chaud, ceci sans risque accru vis-à-vis de la fissuration différée.

Exemple 4 :

Des flans d'acier 22MnB5 de 1, 2, 2,5 mm d'épaisseur comportant sur leurs deux faces un pré-revêtement métallique de 23 micromètres d'épaisseur, contenant 9% de Si et 3% de Fe, le reste étant de l'aluminium et des impuretés inévitables, ont été approvisionnés. Le pré-revêtement est constitué d'une fine couche d'alliage intermétallique comprenant majoritairement $Fe_2Al_3$, $Fe_2Al_5$ et $Fe_xAl_ySi_z$, d'environ 4 micromètres d'épaisseur en contact avec le substrat d'acier. Cette couche intermétallique est surmontée par une couche d'alliage métallique Al-Si de 19 micromètres d'épaisseur.

On a déposé sur certains des flans, par application au rouleau sur la totalité des deux faces principales, une couche composée de polymère et de pigments carbonés, dans la condition I2 indiquée au tableau 1.

Ces flans ont été chauffés à 900°C, les cycles thermiques mesurés par thermocouples ont permis de déterminer l'émissivité thermique : pour les tôles peintes selon l'invention, celle-ci diminue lors du cycle de chauffage de 0,6 à 0,3 environ. Pour les tôles non peintes de référence, l'émissivité diminue de 0,2 à 0,1 environ lors du cycle de chauffage.

En se référant à la figure schématique 2, on a réalisé des flans assemblés par soudage Laser, ces flans étant constitués de deux flans d'épaisseur différente. Le plus mince des flans, repéré 8, d'épaisseur $e_8$ est constitué d'une tôle pré-revêtue de l'alliage d'aluminium ci-dessus; le flan le plus épais, repéré 7, d'épaisseur $e_7$ est constitué d'une tôle pré-revêtue du même alliage d'aluminium et d'une couche polymérisée selon la condition I2 ci-dessus. Afin d'éviter la formation de composés intermétalliques dans la zone fondue lors du soudage, on a ôté par ablation sur les deux faces, au moyen d'un Laser pulsé, la couche d'alliage métallique Al-Si-Fe sur une largeur de 1,1mm à la périphérie des flans, en laissant en place la fine couche d'alliage intermétallique. Dans le cas de flans pré-revêtus non peints, seule la couche d'alliage métallique a été ôtée ; dans le cas de flans pré-revêtus avec couche polymérisée, la couche d'alliage métallique ainsi que la couche polymérisée ont été ôtées sur la largeur mentionnée ci-dessus. Une vitesse d'ablation de 3 m/mn permet d'obtenir les résultats recherchés.

On a ensuite chauffé à 900°C ces flans soudés en mesurant la température par thermocouples placés dans chacune des deux parties 7 et 8 des flans soudés (flans d'épaisseur $e_7$ et $e_8$) On détermine ainsi la durée de chauffage $\Delta t_{20}^{900}$ dans chacune des parties 7 et 8 ainsi que l'écart de température existant entre ces deux parties à tout instant du chauffage. L'écart de température maximal lors du cycle de chauffage $\Delta\Theta_7^8$, ainsi que $\Delta t_{20}^{900}$ sont indiqués au tableau 8. Les flans soudés sont ensuite emboutis à chaud et durcis par maintien sous presse.

Tableau 8

| Référence de l'essai | $e_7$ (mm) flan sans couche polymérisée | $e_8$ (mm) flan avec couche polymérisée | $\dfrac{e_7}{e_8}$ | $\Delta t_{20}^{900}$ (7) (s) | $\Delta t_{20}^{900}$ (8) (s) | $\Delta\Theta_7^8$ (°C) |
|---|---|---|---|---|---|---|
| I4 | 2 | 1 | 2 | 160 | 170 | 44 |
| I5 | 2,5 | 1 | 2,5 | 175 | 170 | 2 |

Par comparaison, le tableau 9 présente le résultat obtenu lors du chauffage d'un flan soudé constitué de deux flans prérevêtus d'alliage Al-Si, non peints, d'épaisseur respective 2 et 1mm.

Tableau 9

| Référence de l'essai | $e_7$ (mm) flan non peint | $e_8$ (mm) flan non peint | $\dfrac{e_7}{e_8}$ | $\Delta t_{20}^{900}$ (7) (s) | $\Delta t_{20}^{900}$ (8) (s) | $\Delta\Theta_7^8$ , (°C) |
|---|---|---|---|---|---|---|
| R3 | 2 | 1 | 2 | 360 | 170 | 155 |

Dans les conditions de l'invention (essais I4 et I5) la durée de chauffage est très semblable dans les deux parties 7 et 8 constitutives du joint soudé. Ceci permet d'assurer que les microstructures du substrat d'acier après austénitisation et du revêtement obtenu par interdiffusion seront très semblables dans les parties 7 et 8 du joint soudé. Par comparaison, l'essai de référence R3 conduit à une situation dans laquelle la partie du flan soudé la plus épaisse est chauffée à 900°C beaucoup plus lentement que la partie mince. Il est donc nécessaire que la partie mince du joint soudé soit maintenue à 900°C pendant 190s, pour que la partie épaisse atteigne la température de 900°C, ce qui peut conduire à un grossissement du grain austénitique non désiré dans le substrat d'acier de la partie la plus mince, ou à une interdiffusion excessive entre le pré-revêtement et le substrat dans cette partie. Le procédé selon l'invention permet d'éviter ces problèmes.

Dans l'essai I5, où le rapport $\dfrac{e_7}{e_8}$ est égal à 2,5, l'écart de température entre les deux parties du joint soudé à tout moment du cycle de chauffage est particulièrement faible; inférieur à 2 °C, alors qu'il est égal à 44 °C dans l'essai I4 $\left(\dfrac{e_7}{e_8}=2\right)$ I4 Ce mode préférentiel où le rapport d'épaisseur est compris entre 2,2 et 2,6, sera choisi lorsque l'on recherche l'homogénéité thermique la plus grande possible lors du chauffage de flans soudés.

Ainsi, l'invention permet la fabrication de pièces embouties à chaud dans des conditions de productivité accrues, présentant une bonne aptitude à la soudabilité par point et à la peinture par cataphorèse, une grande résistance à la corrosion et à la fissuration différée. Ces pièces seront utilisées avec profit comme pièces de structure ou de renfort dans le domaine de la construction automobile.

## Revendications

1. Tôle ou flan pré-revêtu comprenant un substrat d'acier pour traitement thermique (1) surmonté, sur au moins une partie d'au moins d'une de ses faces principales, d'un pré-revêtement (2), comprenant au moins une couche d'aluminium ou d'alliage d'aluminium, surmonté, sur au moins une partie dudit pré-revêtement, d'une couche polymérisée (3) d'épaisseur comprise entre 2 et 30 micromètres, composée d'un polymère ne comprenant pas de silicium et dont la teneur en azote est en quantité inférieure à 1% en poids exprimée par rapport à ladite couche, ladite couche polymérisée contenant des pigments carbonés en quantité comprise entre 3 et 30% en poids, exprimée par rapport à ladite couche.

2. Tôle ou flan selon la revendication 1 **caractérisé en ce que** les éléments dudit polymère sont sélectionnés dans une liste constituée de C, H, O, N

3. Tôle ou flan selon l'une quelconque des revendications 1 à 2 **caractérisé en ce que** ladite couche polymérisée est obtenue à partir d'une résine sous forme de dispersion ou d'émulsion en phase aqueuse

4. Tôle ou flan selon l'une quelconque des revendications 1 à 2 **caractérisé en ce que** ladite couche polymérisée est obtenue à partir d'une résine sous forme de solution dans un solvant non aqueux

5. Tôle ou flan selon l'une quelconque des revendications 1 à 2 **caractérisé en ce que** ladite couche polymérisée est constituée d'un film colaminé audit substrat

6. Tôle ou flan selon la revendication 3 **caractérisé en ce que** ladite couche polymérisée est obtenue à partir d'une résine de type acrylique

7. Tôle ou flan selon la revendication 4 **caractérisé en ce que** ladite couche polymérisée est obtenue à partir d'une résine de type époxy ou acrylique

8.  Tôle ou flan selon la revendication 5 **caractérisé en ce que** ladite couche polymérisée est constituée d'un film de polyéthylène téréphtalate ou de polyéthylène ou de polybutylène-téréphtalate ou de polypropylène

9.  Tôle ou flan selon l'une quelconque des revendications 1 à 8, **caractérisé en ce que** lesdits pigments sont constitués au moins partiellement de carbone activé

10. Tôle ou flan selon l'une quelconque des revendications 1 à 9, **caractérisé en ce que** ledits pigments sont constitués au moins partiellement de graphite

11. Tôle ou flan selon l'une quelconque des revendications 1 à 10 **caractérisé en ce que** la quantité de carbone activé dans ladite couche polymérisée est inférieure à 5%, exprimée en poids par rapport à ladite couche

12. Tôle ou flan selon l'une quelconque des revendications 1 à 11 **caractérisé en ce que** ladite couche d'aluminium ou d'alliage d'aluminium constitue plus de 50% de l'épaisseur dudit prérevêtement.

13. Tôle ou flan selon l'une quelconque des revendications 1 à 12, **caractérisé en ce que** ledit pré-revêtement comporte une couche d'alliage intermétallique (4) en contact avec ledit substrat (1) surmontée d'une couche d'alliage d'aluminium métallique (5) et **en ce que**, sur au moins une face pré-revêtue de ladite tôle, une zone (6) est dépourvue de ladite couche polymérisée et de ladite couche d'alliage métallique, ladite zone étant située à la périphérie de ladite tôle ou dudit flan

14. Flan soudé réalisé par soudage d'au moins deux flans, **caractérisé en ce que** l'un au moins des flans (7) est un flan selon l'une quelconque des revendications 1 à 13 d'épaisseur $e_7$, et qu'au moins un des flans est un flan (8) d'épaisseur $e_8$ constitué d'un substrat d'acier revêtu d'une couche d'aluminium ou d'alliage d'aluminium identique à celle dudit flan (7), l'épaisseur desdits flans (7) et (8) étant telle que $\dfrac{e_7}{e_8} > 1$

15. Flan soudé selon la revendication 14, **caractérisé en ce que** ledit flan (7) est un flan revêtu sur la totalité dudit pré-revêtement, de ladite couche polymérisée (3), et **en ce que** :

$$2,6 \geq \frac{e_7}{e_8} \geq 2,2$$

16. Pièce (9) obtenue par austénitisation puis emboutissage à chaud et trempe par maintien dans l'outil d'emboutissage, d'une tôle ou d'un flan selon la revendication 1, comportant un pré-revêtement comprenant au moins une couche d'aluminium ou d'alliage d'aluminium, la microstructure du substrat (10) de ladite pièce contenant de la martensite et/ou de la bainite, ledit substrat étant surmonté sur au moins l'une de ses faces principales, d'un revêtement (11) résultant de l'interdiffusion entre ledit substrat d'acier et ledit pré-revêtement, ledit revêtement (11) étant surmonté d'une couche d'oxyde (12), **caractérisée en ce que** la teneur pondérale moyenne en oxygène entre 0 et 0,01 micromètres sous la surface de ladite pièce, est inférieure à 25%, et **en ce que** la teneur pondérale moyenne en oxygène entre 0,1 et 0,2 micromètres sous ladite surface, est inférieure à 10%

17. Procédé de fabrication d'une pièce durcie à la presse, comprenant les étapes successives selon lesquelles :

    - on approvisionne une tôle ou un flan substrat d'acier pour traitement thermique
    - on effectue un pré-revêtement comportant au moins une couche d'aluminium ou d'alliage d'aluminium en contact avec le substrat d'acier, sur une au moins une des faces principales de ladite tôle ou dudit flan, puis
    - on dépose sur ledit pré-revêtement, une couche polymérisée (3) d'épaisseur comprise entre 2 et 30 micromètres, composée d'un polymère ne comprenant pas de silicium et dont la teneur en azote est en quantité inférieure à 1% en poids exprimée par rapport à ladite couche, ladite couche polymérisée contenant des pigments carbonés en quantité comprise entre 3 et 30% en poids, exprimée par rapport à ladite couche, puis
    - on chauffe ledit flan ou ladite tôle de manière à réaliser une interdiffusion entre ledit substrat d'acier et ledit pré-revêtement et de manière à conférer une structure partiellement ou totalement austénitique audit acier, puis
    - on emboutit ledit flan ou ladite tôle à chaud pour obtenir une pièce, puis
    - on refroidit ladite pièce par maintien dans l'outil d'emboutissage de façon à ce que la microstructure dudit substrat d'acier contienne, au moins dans une partie de ladite pièce, de la martensite et/ou de la bainite

18. Procédé selon la revendication 17, **caractérisé en ce que** l'épaisseur de ladite tôle ou dudit flan est compris entre 1 et 2 mm et que la vitesse de chauffage dudit flan ou de ladite tôle entre 50 et 500°C est comprise entre 15 et 35°C/s

19. Procédé selon la revendication 17 ou 18, **caractérisé en ce que** ladite couche d'aluminium ou d'alliage d'aluminium occupe plus de 50% de l'épaisseur dudit prérevêtement.

20. Procédé selon l'une quelconque des revendications 17 à 19, **caractérisé en ce que** les éléments dudit polymère sont sélectionnés dans une liste constituée de C, H, O, N

21. Procédé de fabrication d'un flan soudé embouti à chaud et durci à la presse, comprenant les étapes successives selon lesquelles :

- on approvisionne un flan soudé réalisé par soudage d'au moins deux flans, comprenant
- au moins un flan (7) selon l'une quelconque des revendications 1 à 13, d'épaisseur $e_7$,
- au moins un flan (8) d'épaisseur $e_8$ constitué d'un substrat d'acier revêtu d'une couche d'aluminium ou d'alliage d'aluminium d'un pré-revêtement identique à celui dudit flan (7),

- l'épaisseur desdits flans (7) et (8) étant telle que $\dfrac{e_7}{e_8} > 1$

- on chauffe ledit flan soudé de manière à réaliser une interdiffusion entre ledit substrat d'acier et ledit pré-revêtement et de manière à conférer une structure partiellement ou totalement austénitique audit acier, puis
- on emboutit ledit flan soudé pour obtenir un flan soudé embouti à chaud, puis
- on refroidit ledit flan soudé embouti à chaud par maintien dans l'outil d'emboutissage de manière à obtenir, au moins dans une partie dudit substrat dudit flan soudé embouti à chaud, de la martensite et/ou de la bainite

22. Procédé de fabrication d'un flan soudé, embouti à chaud et durci selon la revendication 21, **caractérisé en ce que** ledit flan (7) est revêtu sur la totalité dudit pré-revêtement, de ladite couche polymérisée (3), et **en ce que** :

$$2{,}6 \geq \frac{e_7}{e_8} \geq 2{,}2$$

**Patentansprüche**

1. Blech oder vorbeschichtete Platte, aufweisend ein Stahlsubstrat zur Wärmebehandlung (1), das auf zumindest einem Teil mindestens einer seiner Hauptseiten mit einer Vorbeschichtung (2) überzogen ist, aufweisend mindestens eine Schicht aus Aluminium oder einer Aluminiumlegierung, die auf zumindest einem Teil der Vorbeschichtung mit einer polymerisierten Schicht (3) überzogen ist, mit einer Dicke zwischen 2 und 30 pm, die aus einem Polymer zusammengesetzt ist, das kein Silicium aufweist und dessen Stickstoffgehalt in einer Menge von kleiner als 1 Gew.-% bezogen auf die Schicht vorliegt, wobei die polymerisierte Schicht kohlenstoffhaltige Pigmente in einer Menge von zwischen 3 und 30 Gew.-% bezogen auf die Schicht enthält.

2. Blech oder Platte gemäß Anspruch 1, **dadurch gekennzeichnet, dass** die Elemente des Polymers aus einer Liste ausgewählt sind, die aus C, H, O, N gebildet ist.

3. Blech oder Platte gemäß irgendeinem der Ansprüche 1 bis 2, **dadurch gekennzeichnet, dass** die polymerisierte Schicht aus einem Harz in Form einer Dispersion oder einer Emulsion in wässriger Phase erhalten wird.

4. Blech oder Platte gemäß irgendeinem der Ansprüche 1 bis 2, **dadurch gekennzeichnet, dass** die polymerisierte Schicht aus einem Harz in Form einer Lösung in einem nichtwässrigen Lösungsmittel erhalten wird.

5. Blech oder Platte gemäß irgendeinem der Ansprüche 1 bis 2, **dadurch gekennzeichnet, dass** die polymerisierte Schicht aus einem auf das Substrat co-laminierten Film gebildet ist.

6. Blech oder Platte gemäß Anspruch 3, **dadurch gekennzeichnet, dass** die polymerisierte Schicht aus einem Harz des Acryltyps erhalten wird.

7. Blech oder Platte gemäß Anspruch 4, **dadurch gekennzeichnet, dass** die polymerisierte Schicht aus einem Harz des Epoxid- oder Acryltyps erhalten wird.

8. Blech oder Platte gemäß Anspruch 5, **dadurch gekennzeichnet, dass** die polymerisierte Schicht aus einem Polyethylenterephthalat- oder Polyethylen- oder Polybutylenterephthalat- oder Polypropylen-Film gebildet ist.

9. Blech oder Platte gemäß irgendeinem der Ansprüche 1 bis 8, **dadurch gekennzeichnet, dass** die Pigmente zumindest teilweise aus aktiviertem Kohlenstoff gebildet sind.

10. Blech oder Platte gemäß irgendeinem der Ansprüche 1 bis 9, **dadurch gekennzeichnet, dass** die Pigmente zumindest teilweise aus Graphit gebildet sind.

11. Blech oder Platte gemäß irgendeinem der Ansprüche 1 bis 10, **dadurch gekennzeichnet, dass** die Menge an aktiviertem Kohlenstoff in der polymerisierten Schicht kleiner als 5% ist, ausgedrückt in Gewicht bezogen auf die Schicht.

12. Blech oder Platte gemäß irgendeinem der Ansprüche 1 bis 11, **dadurch gekennzeichnet, dass** die Schicht aus Aluminium oder einer Aluminiumlegierung mehr als 50% der Dicke der Vorbeschichtung bildet.

13. Blech oder Platte gemäß irgendeinem der Ansprüche 1 bis 12, **dadurch gekennzeichnet, dass** die Vorbeschichtung eine intermetallische Legierungsschicht (4) in Kontakt mit dem Substrat (1) aufweist, die mit einer Metall-Aluminiumlegierung (5) überzogen ist, und dass, auf mindestens einer vorbeschichteten Seite des Blechs, ein Bereich (6) ohne die polymerisierte Schicht und ohne die Metalllegierungsschicht ist, wobei sich der Bereich am Umfang des Blechs oder der Platte befindet.

14. Geschweißte Platte, die durch Schweißen mindestens zweiter Platten realisiert ist, **dadurch gekennzeichnet, dass** zumindest eine der Platten (7) eine Platte gemäß irgendeinem der Ansprüche 1 bis 13 mit einer Dicke $e_7$ ist, und dass mindestens eine der Platten eine Platte (8) mit einer Dicke $e_8$ ist, die aus einem Stahlsubstrat gebildet ist, das mit einer Schicht aus Aluminium oder einer Aluminiumlegierung beschichtet ist, die mit derjenigen der Platte (7) identisch ist, wobei die Dicke der Platten (7) und (8) derart ist, dass $\dfrac{e_7}{e_8} > 1.$

15. Geschweißte Platte gemäß Anspruch 14, **dadurch gekennzeichnet, dass** die Platte (7) eine Platte ist, die auf der Gesamtheit der Vorbeschichtung mit der polymerisierten Schicht (3) beschichtet ist, und dass:

$$2,6 \geq \frac{e_7}{e_8} \geq 2,2.$$

16. Stück (9), das durch Austenitisierung, anschließendes Warmumformen und Härtung eines Blechs oder einer Platte gemäß Anspruch 1 durch Halten im Umformungswerkzeug erhalten wird, aufweisend eine Vorbeschichtung, die mindestens eine Schicht aus Aluminium oder einer Aluminiumlegierung aufweist, wobei die Mikrostruktur des Substrats (10) des Stücks Martensit und/oder Bainit enthält, wobei das Substrat auf mindestens einer seiner Hauptseiten mit einer Beschichtung (11) überzogen ist, die aus der wechselseitigen Diffusion zwischen dem Stahlsubstrat und der Vorbeschichtung resultiert, wobei die Beschichtung (11) mit einer Oxidschicht (12) überzogen ist, **dadurch gekennzeichnet, dass** der mittlere Gewichtsgehalt an Sauerstoff zwischen 0 und 0,01 $\mu$m unter der Oberfläche des Stücks kleiner als 25% ist, und dass der mittlere Gewichtsgehalt an Sauerstoff zwischen 0,1 und 0,2 $\mu$m unter der Oberfläche kleiner als 10% ist.

17. Verfahren zum Herstellen eines pressgehärteten Stücks, aufweisend die folgenden aufeinanderfolgenden Schritte, bei denen:

    - ein Blech oder eine Stahlsubstrat-Platte zur Wärmebehandlung bereitgestellt wird,
    - eine Vorbeschichtung durchgeführt wird, aufweisend mindestens eine Schicht aus Aluminium oder einer Aluminiumlegierung in Kontakt mit dem Stahlsubstrat, auf mindestens einer der Hauptseiten des Blechs oder der Platte, anschließend

- auf die Vorbeschichtung eine polymerisierte Schicht (3) aufgebracht wird, mit einer Dicke von zwischen 2 und 30 pm, die aus einem Polymer zusammengesetzt ist, das kein Silicium aufweist und dessen Stickstoffgehalt in einer Menge von kleiner als 1 Gew.-% bezogen auf die Schicht vorliegt, wobei die polymerisierte Schicht kohlenstoffhaltige Pigmente in einer Menge von zwischen 3 und 30 Gew.-% bezogen auf die Schicht aufweist, anschließend

- das Blech oder die Platte erhitzt wird, um eine wechselseitige Diffusion zwischen dem Stahlsubstrat und der Vorbeschichtung zu realisieren und um dem Stahl eine teilweise oder vollständig austenitische Struktur zu verleihen, anschließend

- die Platte oder das Blech warmumgeformt wird, um ein Stück zu erhalten, und anschließend

- das Stück abgekühlt wird, wobei es in dem Umformungswerkzeug gehalten wird, so dass die Mikrostruktur des Stahlsubstrats zumindest in einem Teil des Stücks Martensit und/oder Bainit enthält.

18. Verfahren gemäß Anspruch 17, **dadurch gekennzeichnet, dass** die Dicke des Blechs oder der Platte zwischen 1 und 2 mm beträgt und dass die Geschwindigkeit des Erhitzens der Platte oder des Blechs auf zwischen 50 und 500°C zwischen 15 und 35°C/s beträgt.

19. Verfahren gemäß Anspruch 17 oder 18, **dadurch gekennzeichnet, dass** die Schicht aus Aluminium oder einer Aluminiumlegierung mehr als 50% der Dicke der Vorbeschichtung beträgt.

20. Verfahren gemäß irgendeinem der Ansprüche 17 bis 19, **dadurch gekennzeichnet, dass** die Elemente des Polymers aus einer Liste ausgewählt werden, die aus C, H, O, N gebildet ist.

21. Verfahren zum Herstellen einer warmumgeformten und pressgehärteten geschweißten Platte, aufweisend die folgenden aufeinanderfolgenden Schritte, bei denen:

- eine geschweißte Platte bereitgestellt wird, die durch Schweißen mindestens zweier Platten realisiert wird, aufweisend:
- mindestens eine Platte (7) gemäß irgendeinem der Ansprüche 1 bis 13, mit einer Dicke $e_7$,
- mindestens eine Platte (8) mit einer Dicke $e_8$, die aus einem Stahlsubstrat gebildet ist, das mit einer Schicht aus Aluminium oder einer Aluminiumlegierung überzogen ist, mit einer Vorbeschichtung, die mit derjenigen der Platte (7) identisch ist,
- wobei die Dicke der Platten (7) und (8) derart ist, dass $\dfrac{e_7}{e_8} > 1$,
- die geschweißte Platte derart erhitzt wird, dass eine wechselseitige Diffusion zwischen dem Stahlsubstrat und der Vorbeschichtung realisiert wird, und derart, dass dem Stahl eine teilweise oder vollständig austenitische Struktur verliehen wird, anschließend
- die geschweißte Platte warmumgeformt wird, um eine warmumgeformte geschweißte Platte zu erhalten, anschließend
- die warmumgeformte geschweißte Platte abgekühlt wird, wobei sie in dem Umformungswerkzeug gehalten wird, um zumindest in einem Teil des Substrats der warmumgeformten geschweißten Platte Martensit und/oder Bainit zu erhalten.

22. Verfahren zum Herstellen einer geschweißten, warmumgeformten und gehärteten Platte gemäß Anspruch 21, **dadurch gekennzeichnet, dass** die Platte (7) auf der Gesamtheit der Vorbeschichtung mit der polymerisierten Schicht (3) beschichtet wird, und dass:

$$2,6 \geq \frac{e_7}{e_8} \geq 2,2.$$

## Claims

1. A pre-coated sheet or blank comprising a steel substrate for heat treatment (1) overlaid, over at least a portion of at least one of its main faces, by a pre-coating (2), comprising at least one layer of aluminum or aluminum alloy, overlaid, over at least a portion of said pre-coating, by a polymerized layer (3) having a thickness comprised between 2 and 30 micrometers, made up of a polymer that does not contain silicon and the nitrogen content of which is less than 1 wt% expressed in relation to said layer, said polymerized layer containing carbon pigments in a quantity between 3 and 30 wt%, expressed in relation to said layer.

2. The sheet or blank according to claim 1, **characterized in that** the elements of said polymer are selected from a list consisting of C, H, O, N.

3. The sheet or blank according to any one of claims 1 to 2, **characterized in that** said polymerized layer is obtained from a resin in the form of a dispersion or an emulsion in aqueous phase.

4. The sheet or blank according to any one of claims 1 to 2, **characterized in that** said polymerized layer is obtained from a resin in the form of solution in a non-aqueous solvent.

5. The sheet or blank according to any one of claims 1 to 2, **characterized in that** said polymerized layer is made up of a film that is roll-bonded to the substrate.

6. The sheet or blank according to claim 3, **characterized in that** said polymerized layer is obtained from an acrylic-type resin.

7. The sheet or blank according to claim 4, **characterized in that** said polymerized layer is obtained from an epoxy- or acrylic-type resin.

8. The sheet or blank according to claim 5, **characterized in that** said polymerized layer is made up of a polyethylene terephthalate or polyethylene or polybutylene-terephthalate or polypropylene film.

9. The sheet or blank according to any one of claims 1 to 8, **characterized in that** said pigments are at least partly made up of activated carbon.

10. The sheet or blank according to any one of claims 1 to 9, **characterized in that** said pigments are at least partly made up of graphite.

11. The sheet or blank according to any one of claims 1 to 10, **characterized in that** the quantity of activated carbon in said polymerized layer is preferably less than 5%, expressed by weight in relation to said layer.

12. The sheet or blank according to any one of claims 1 to 11, **characterized in that** said aluminum or aluminum alloy layer makes up more than 50% of the thickness of said pre-coating.

13. The sheet or blank according to any one of claims 1 to 12, **characterized in that** said pre-coating comprises a layer of intermetallic alloy (4) in contact with said substrate (1) overlaid by a layer of metal aluminum alloy (5) and **in that**, on at least one pre-coated surface of said sheet, said polymerized layer and said metal alloy layer are not present in a zone (6), said zone being located on the periphery of said sheet or of said blank.

14. A welded blank obtained by welding at least two blanks, **characterized in that** at least one of the blanks (7) is a blank according to any one of claims 1 to 13 having a thickness $e_7$, and at least one of the blanks is a blank (8) having a thickness $e_8$ made up of a steel substrate coated by a layer of aluminum or aluminum alloy identical to that of said blank (7), the thickness of said blanks (7) and (8) being such that $\dfrac{e_7}{e_8} > 1.$

15. The welded blank according to claim 14, **characterized in that** said blank (7) is a blank coated over the entirety of said pre-coating of said polymerized layer (3), and **in that**:

$$2.6 \ge \frac{e_7}{e_8} \ge 2.2.$$

16. A part (9) obtained by austenitizing, followed by hot stamping and hardening by holding in the stamping tool, of a sheet or of a blank according to claim 1, having a pre-coating comprising at least one layer of aluminum or aluminum alloy, the microstructure of the substrate (10) of said part containing martensite and/or bainite, said substrate being overlaid on at least one of its main surfaces by a coating (11) resulting from the inter-diffusion between said steel substrate and said pre-coating, said coating (11) being overlaid by a layer of oxide (12), **characterized in that** the average percentage of oxygen by weight, between 0 and 0.01 micrometers below the surface of said part, is less than 25% and **in that** the average percentage of oxygen by weight, between 0.1 and 0.2 micrometers below said surface, is less than 10%.

17. A method for manufacturing a press-hardened part comprising the following successive steps:

   - providing a steel sheet or blank substrate for heat treatment,
   - performing a pre-coating comprising at least one layer of aluminum or aluminum alloy in contact with the steel substrate on at least one of the main faces of said sheet or blank, then,
   - depositing, on said pre-coating, a polymerized layer (3) having a thickness between 2 and 30 micrometers, made up of a polymer that does not contain silicon and the nitrogen content of which is less than 1 wt% expressed in relation to said layer, said polymerized layer containing carbon pigments in a quantity comprised between 3 and 30 wt%, expressed in relation to said layer, then
   - heating said blank or sheet to obtain an inter-diffusion between said steel substrate and said pre-coating, to obtain a partly or completely austenitic structure on said steel, then
   - hot stamping said blank or said sheet to obtain a part, then
   - cooling said part by holding it in the stamping tool so that the microstructure of said steel substrate contains, at least in a portion of said part, martensite and/or bainite.

18. The method according to claim 17, **characterized in that** the thickness of said sheet or blank is comprised between 1 and 2 mm, and **in that** the heating rate of said blank or sheet between 50 and 500° C is comprised between 15 and 35° C/s.

19. The method according to claim 17 or 18, **characterized in that** said layer of aluminum or aluminum alloy occupies more than 50% of the thickness of said pre-coating.

20. The method according to any one of claims 17 to 19, **characterized in that** said elements of the polymer are selected from a list made up of C, H, O, N.

21. A method for manufacturing a welded blank hot stamped and press-hardened, comprising the following successive steps:

   - providing a welded blank created by welding at least two blanks, comprising
   - at least one blank (7) according to any one of claims 1 to 13, having a thickness $e_7$,
   - at least one blank (8) having a thickness $e_8$ made up of a steel substrate coated with a layer of aluminum or aluminum alloy of a pre-coating identical to that of the blank (7),
   - the thickness of said blanks (7) and (8) being such that $\dfrac{e_7}{e_8} > 1$
   - heating said welded blank to perform an inter-diffusion between said steel substrate and said pre-coating and to impart a partly or totally austenitic structure to said steel, then
   - stamping said welded blank to obtain a hot stamped welded blank, then
   - cooling said hot stamped welded blank by holding it in the stamping tool to obtain, in at least a portion of said substrate of said hot stamped welded blank, martensite and/or bainite.

22. A method for manufacturing a welded blank hot stamped and press-hardened according to claim 21, **characterized in that** said blank (7) is coated over said entire pre-coating, by the polymerized layer (3), and **in that**:

$$2.6 \geq \frac{e_7}{e_8} \geq 2.2.$$

3

2

1

2

3

## Figure 1

7                    8

## Figure 2

Figure 3

Figure 4

Figure 5

Figure 6

Figure 7

Figure 8

50 µm

Figure 9

50 µm

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2780984
- FR 2807447
- EP 2312005 A
- EP 2463395 A
- EP 2007545 A